Europäisches Patentamt

European Patent Office

Office européen des brevets

(19)

(11) Veröffentlichungsnummer: **0 267 896**
**A2**

(12) **EUROPÄISCHE PATENTANMELDUNG**

(21) Anmeldenummer: 87890248.5

(22) Anmeldetag: 06.11.87

(51) Int. Cl.⁴: **G 01 N 27/72**

(30) Priorität: 12.11.86 AT 3006/86

(43) Veröffentlichungstag der Anmeldung:
18.05.88 Patentblatt 88/20

(84) Benannte Vertragsstaaten:
BE CH DE FR GB IT Li NL SE

(71) Anmelder: **VEREINIGTE EDELSTAHLWERKE
AKTIENGESELLSCHAFT (VEW)
Elisabethstrasse 12
A-1010 Wien (AT)**

(72) Erfinder: **Kutllin, Paul
Johann-Böhmstrasse 30/7
A-8605 Kapfenberg/Stmk. (AT)**

(54) Messeinrichtung zur Bestimmung des Gehaltes an magnetisierbarer Substanz.

(57) Die Erfindung betrifft eine Meßeinrichtung zur Bestimmung des Gehaltes an magnetisierbarer Substanz, insbesondere von Ferrit und Martensit, in einer Probe, wobei die Meßeinrichtung eine vorzugsweise mit einem Eisenkern versehene Erregerspule für ein an die zu untersuchende Probe anzulegendes Magnetfeld, eine Auswerteschaltung sowie eine Anzeigeeinrichtung für den Gehalt an magnetisierbarer Substanz in der Probe proportionale Meßwerte aufweist. Zur Verbesserung der Meßgenauigkeit ist vorgesehen, daß die Erregerspule ($L_1$) Teil eines abgestimmten Resonanz-Schwingkreises ($L_1$, $C_1$, $L_2$) ist, daß die Erregerspule ($L_1$) bezüglich ihrer Induktivität, durch das in der Probe (5) aufgrund des angelegten Magnetfeldes induzierte Magnetfeld veränderbar ist, wobei ihre Veränderung eine neue Resonanzfrequenz des Schwingkreises festlegt und daß die Veränderung zumindest eines der Parameter des Schwingkreises bei Veränderung der Resonanzfrequenz der Anzeigevorrichtung als dem Gehalt an magnetisierbarer Substanz proportionaler Meßwert zugeführt ist.

Fig. 3

EP 0 267 896 A2

**Beschreibung**

Meßeinrichtung zur Bestimmung des Gehaltes an magnetisierbarer Substanz

Die Erfindung betrifft eine Meßeinrichtung zur Bestimmung des Gehaltes an magnetisierbarer Substanz, insbesondere von Ferrit und Martensit, in einer Probe, wobei die Meßeinrichtung eine vorzugsweise mit einem Eisenkern versehene Erregerspule für ein an die zu untersuchende Probe anzulegendes Magnetfeld, eine Auswerteschaltung sowie eine Anzeigeeinrichtung für den Gehalt an magnetisierbarer Substanz in der Probe proportionale Meßwerte aufweist.

Eine Bestimmung des Gehaltes bzw. Anteiles magnetisierbarer Substanz in vorgegebenen Proben bzw. Werkstücken ist z.B. durch metallographische Untersuchungsmethoden, Röntgenbeugung, Untersuchung der Sättigungsmagnetisierung, Messungen mittels Magnetwaage, Berechnungen auf Grund der Analyse nach dem Schaeffler-Diagramm, magnetische auf dem Wirbelstromprinzip beruhende Ferritmeßgeräte (Fa. Förster, Type 1.053, Fa. Fischer, Type M10B) und andere Methoden möglich.

Der Gehalt an magnetischer Substanz, insbesondere der Gehalt an Ferrit, der ein Gefügebestandteil ist, der je nach Werkstofftyp unerwünscht oder auch in größeren %-Gehalten erforderlich ist, muß aus Qualitätssicherungsgründen sicher erfaßt werden. Für die Praxis ist jedoch eine zerstörungsfreie und schnelle Bestimmung z.B. an fertigen Werkstücken erforderlich.

Metallographische-, Röntgenstrahlenbeugung-, Magnetwaage-und Sättigungsmagnetisierungsbestimmungen sind umständlich, nicht zerstörungsfrei und dadurch sind Messungen an Werkstücken oft nicht möglich. Die bekannten tragbaren Meßgeräte ermöglichen zwar zerstörungsfreie Ferritmessungen, haben aber systembedingte Fehlanzeigen bei höheren Ferritgehalten.

Ein bekanntes Ferritmeßgerät (Fa. Förster) besteht aus einem Meßgerät mit Bedienungselementen und Anzeige, sowie einem an dieses Gerät angeschlossenen Taster. Der Taster ist ein ferromagnetischer Stift, der zwei Spulen trägt. Eine Spule wird durch einen Wechselstrom erregt (Primärwicklung) und induziert nach dem Induktionsgesetz e $=$ k.w.f. $\Phi$ in der zweiten Spule (Sekundärwirkung) eine EMK. Beim Ankoppeln des Stiftes an eine Probe mit mehr oder weniger Ferritgehalt wird der magnetische Kraftfluß mehr oder weniger verändert, und somit entsteht, da die anderen Parameter unbeeinflußt bleiben, eine dem Ferritgehalt der Probe proportionale EMK.

Durch entsprechende Kalibrierung wird versucht bzw. in einem bestimmten Bereich auch erreicht, diese EMK dem Ferritgehalt der Probe proportional zuzuordnen.

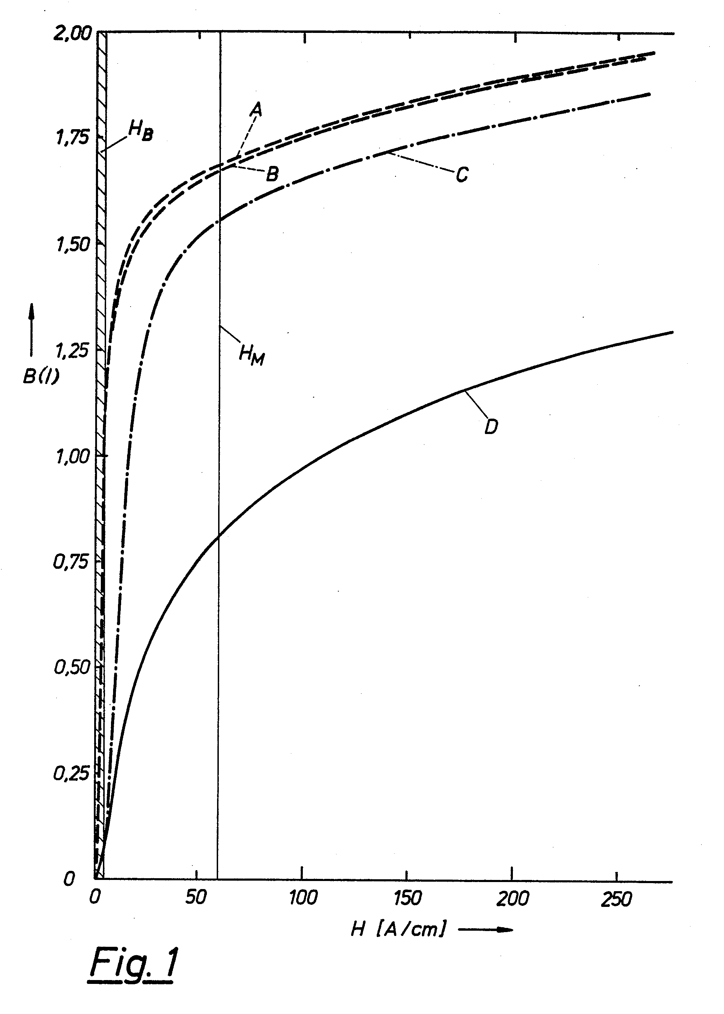

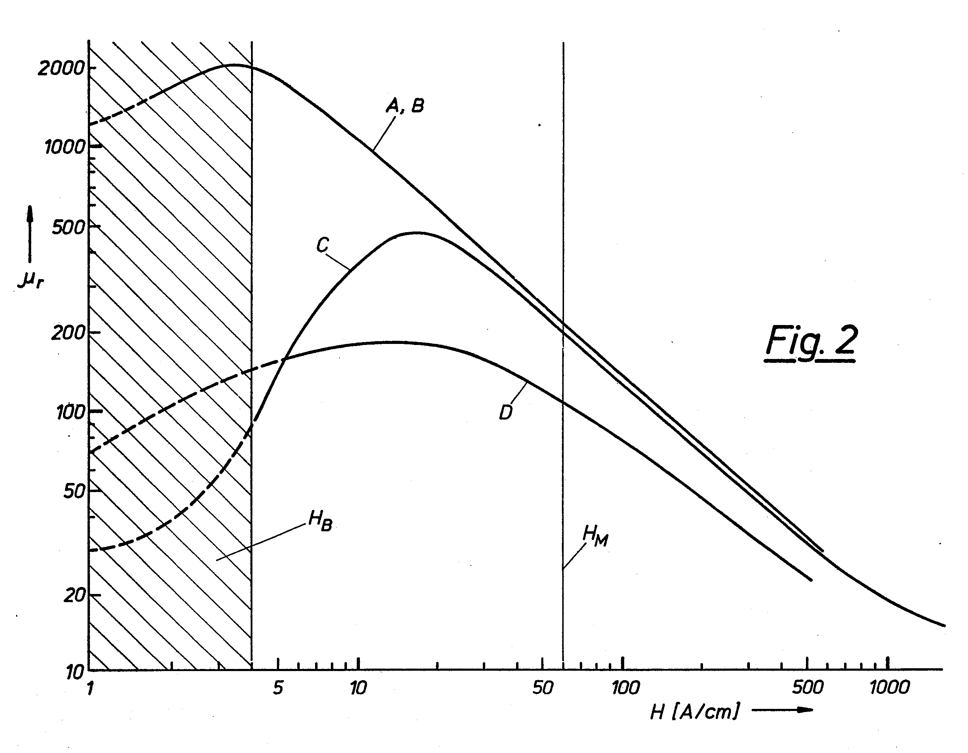

Bedingt durch das Transformatorprinzip ist jedoch, um ein großes Meßsignal zu erreichen, eine große Änderung des magnetischen Kraftflusses $\Phi$ notwendig. Da $\Phi$ aber eine Funktion von B ist (magnetische Induktion, Fig. 1) und B mit der relativen Permeabilität $\mu_r$ verknüpft ist, liegt der Arbeitspunkt dieser Meßgeräte im Bereich kleiner Feldstärke (bis 4 A/cm). Dies ist aber der Bereich des steilen Kurvenanstieges der Magnetisierungslinien und demzufolge ergibt sich ein großes $\mu_r$, wobei die Meßungenauigkeiten aufgrund des steilen Kurvenanstieges groß sind. Bei den relativ kleinen Feldstärken der bekannten Meßeinrichtungen sind, wie Fig. 2 zeigt, Überschneidungen von Kennlinien der relativen Permeabilität $\mu_r$ möglich, und es kann aus diesem Grund zu Fehlanzeigen kommen.

Bei relativ hohen Frequenzen der Erregermagnetfelder der Meßtaster (2 kHz) zeigen die Meßwerte eine Beeinflussung durch die elektrische Leitfähigkeit der zu messenden Werkstoffe. Wie Untersuchungen zeigen, sind erst bei ca. 500 Hz und darunter diese (aufgrund der Magnetfelder der durch das Erregerfeld in der untersuchten Probe induzierten Wirbelströme verursachten) Fehlanzeigen zu vernachlässigen. Die Wirbelstromverluste steigen mit der Leitfähigkeit und der Frequenz und üben eine Rückwirkung auf den Meßkreis aus.

Aufgabe der Erfindung ist die Entwicklung einer Meßeinrichtung mit vernachlässigbarem Einfluß der elektrischen Leitfähigkeit auf das Meßergebnis, bei der Gehalte an magnetisierbarer Substanz von 0 - 100 % genau feststellbar sind. Ferner sollen Ankopplungsfehler gering gehalten werden und der Einfluß von an den Proben vorhandenen Magnetisierungen weitgehend ausgeschaltet werden. Wünschenswert wäre der Einsatz einer Erregermagnetfeldstärke, die die Magnetisierungslinien nach dem Knick schneidet (Fig. 2), wo bereits der Trend der Magnetisierungskurven in Abhängigkeit des Gehaltes an magnetisierbarer Substanz in richtiger Relation steht.

Diese Ziele werden bei einer Meßeinrichtung der eingangs genannten Art dadurch erreicht, daß die Erregerspule Teil eines auf eine bestimmte Resonanzfrequenz abgestimmten und vorzugsweise im Einsatz in einem gewählten Arbeitspunkt betriebenen Schwingkreises ist, daß die Erreger spule bezüglich ihrer magnetischen Werte, insbesondere bezüglich ihrer Induktivität, durch das in der Probe aufgrund des angelegten Magnetfeldes induzierte Magnetfeld veränderbar ist, wobei ihre Veränderung eine neue Resonanzfrequenz des Schwingkreises festlegt und daß die Veränderung zumindest eines der Parameter des Schwingkreises, z.B. Strom, Spannung, Frequenz, bei Veränderung der Resonanzfrequenz der Anzeigevorrichtung als dem Gehalt an magnetisierbarer Substanz proportionaler Meßwert zugeführt ist.

Eine erfindungsgemäß derart ausgebildete Meßeinrichtung ermöglicht eine sehr genaue Bestimmung der Anteile an magnetisierbarer Substanz von 0 - 100 %, da die Erregerspule Teil eines abgestimmten Resonanzkreises ist und die Resonanzfrequenz eines Resonanzkreises auf Veränderungen der Parameter sehr empfindlich reagiert. Durch eine einfache Kalibrierungsmessung, bei der die Erregerspule nicht mit einer Probe kontaktiert ist, kann der Nullpunkt der Messung exakt eingestellt werden. Der Skalenendpunkt ergibt sich bei Messung einer Probe, die zu 100 % aus magnetisierbarer Substanz (z.B. reinem Ferrit) besteht.

Eine bevorzugte Ausführungsform der Erfindung sieht vor, daß der Schwingkreis von einer Serienresonanzschaltung der Erregerspule, eines Kondensators und einer Kopplungsspule zur Einspeisung der Betriebsfrequenz des Schwingkreises gebildet ist. Dabei ist es vorteilhaft, wenn als Meßwert für die Auswerteschaltung der Spannungsabfall an der Erregerspule abgegriffen ist. Eine alternative Ausführungsform sieht erfindungsgemäß vor, daß der Schwingkreis von eienr Parallelresonanzschaltung der Erregerspule, eines Kondensators und einer Kopplungsspule zur Einspeisung der Betriebsfrequenz des Schwingkreises gebildet ist. Dabei ist vorgesehen, daß als Meßwert für die Auswerteschaltung der Stromanstieg im Kreis oder der Spannungsabfall an einem zwischen dem Kondensator und der Erregerspule eingeschalteten Widerstand abgegriffen ist. Diese Ausführungsform stellen einfach aufgebaute, im Betrieb robuste, nicht sonderlich temperaturempfindliche und genau anzeigende Meßeinrichtungen dar.

Große Meßbereiche für die an den Resonanzkreisen abgenommenen Meßwerte, erhält man, wenn als Betriebsfrequenz des Serien- oder Parallelresonanzkreises eine im Frequenzbereich der größte Steigung aufweisenden Flankenabschnitte der Resonanzkurve gelegene Frequenz vorgesehen ist.

Eine weitere Ausführungsform der Erfindung ist dadurch gekennzeichnet, daß von der Erregerspule und einem ihr parallel oder in Serie geschalteten Kondensator ein Schwingkreis gebildet ist, welcher an einen NF-Generator angekoppelt ist bzw. einen Teil desselben bildet, wobei die Frequenz des Schwingkreises durch Ankopplung an ein Werkstück veränderbar ist. Dabei ist vorgesehen, daß der Schwingkreis auf eine bestimmte Resonanzfrequenz abgestimmt ist und als Meßwert für die Auswerteschaltung die Frequenzänderung des Schwingkreises bei Änderung der Induktivität der Erregerspule abgeführt ist. Diese komplex aufgebaute Meßeinrichtung kann sehr empfindlich ausgeführt werden und sehr exakte Meßergebnisse liefern.

Bevorzugt ist es, daß die Feldstärke des von der Erregerspule an die Probe angelegten Magnetfeldes zwischen 20 und 200 A/cm, vorzugsweise zwischen 30 und 100 A/cm, ins besondere zwischen 50 und 70 A/cm liegt. Bei Verwendung derartig hoher Magnetfelder erreicht man, daß Ankopplungsfehler des Tasters keine so große Rolle spielen wie bei der Verwendung geringer Feldstärken. Überdies werden übliche in den Proben vorhandene Restmagnetisierungen beseitigt bzw. beeinflussen nicht das Meßergebnis. Ferner liegen die gemessenen Magnetisierungslinien in einer richtigen Reihung bezogen auf die Substanz (ferromagnetisch, ferritisch usw.) vor (Fig. 1 bzw. 2).

Zur Aufbringung derartiger Magnetfelder ist es vorteilhaft, wenn die Erregerspule einen an das zu untersuchende Werkstück anlegbaren, vorzugsweise ferritischen, Tastkern umgibt und von einem vorzugsweise zylindrischen Magnetjoch umgeben ist, dessen eines Ende mit dem Tastkern verbunden und dessen anderes Ende vom Tastkern überragt ist. Dies ermöglicht den Aufbau eines handlichen Tasters, der gut mit der Probe kontaktierbar ist und dessen Magnetfluß genau und gut an die Proben ankoppelbar ist.

Zur Signalauswertung ist es einfach, wenn der Anzeigenvorrichtung als Auswerteschaltung für das Meßsignal ein Brückengleichrichter und eine Siebkette vorgeschaltet sind.

Im folgenden wird die Erfindung anhand der Zeichnung näher erläutert. Es zeigen:

Fig. 1 ein Diagramm mit Magnetisierungslinien

Fig. 2 ein Diagramm mit Permeabilitätskurven

Fig. 3 ein Prinzip-Schaltschema einer erfindungsgemäßen Meßeinrichtung

Fig. 4 ein Schema für die Ableitung des Meßsignals

Fig. 5 ein Schaltschema eines Parallelresonanzkreises für die erfindungsgemäße Meßeinrichtung

Fig. 6 ein Schaltschema eines Schwingkreises, der an einen NF-Generator gekoppelt bgw. ein Teil deises Generators ist

Fig. 6a ein Schema für die Ableitung des Meßsignals

Fig. 7 schematisch den Aufbau eines Tasters mit Erregerspule.

Fig. 1 veranschaulicht den Zusammenhang zwischen der an eine Probe angelegten Feldstärke und der in der Probe auftretenden magnetischen Induktion. Die Kurven A und B sind hiebei für unlegierten Stahl, die Kurve C für Elektrolyteisen und die Kurve D für Duplexstahl, also 2-phasigen Stahl, charakteristisch. Mit $H_B$ ist der Feldstärkenbereich der bekannten Ferritmeßgeräte gekennzeichnet, mit $H_M$ die Feldstärke der erfindungsgemäßen Meßeinrichtung angegeben. Man erkennt, daß die bekannten Meßgeräte mit einer Feldstärke arbeiten, bei der sich ein schleifender Schnitt mit den Magnetisierungslinien ergibt.

Fig. 2 zeigt ein Diagramm der relativen Permeabilität $\mu_r$ in Abhängigkeit von der Feldstärke H des an die Probe angelegten Erregermagnetfeldes $H_B$ und $H_M$.

Die Permeabilitätskurven besitzen in dem Bereich niedriger Meßmagnetfeldstärken Überschneidungen, z.B. überschneiden sich die Kurven für Elektrolyteisen und Duplexstahl, sodaß bei niedrigen Meßmagnetfeldstärken Irrtümer bei der Beurteilung der Meßergebnisse auftreten können. Bei der Meßfeldstärke $H_M$ des erfindungsgemäßen Meßge rätes treten jedoch derartige Irrtümer nicht auf, da die einzelnen Permeabilitätskurven bereits in der Reihung entsprechend ihrer relativen Permeabilität geordnet sind. In Fig. 1 werden die Magnetisierungslinien als Neukurven bzw. Erstkurven angeführt.

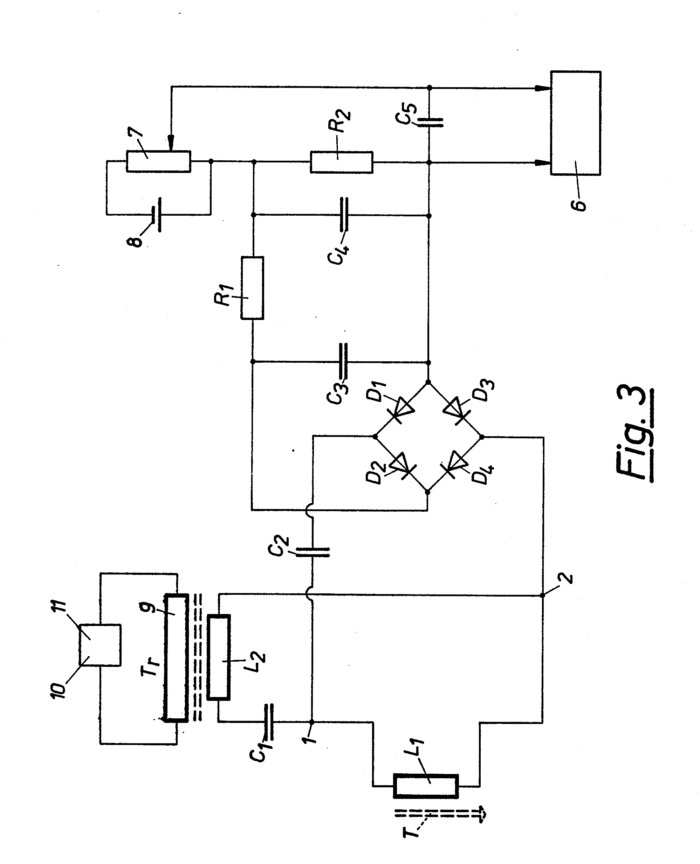

Fig. 3 zeigt ein prinzipielles Ausführungsbeispiel einer erfindungsgemäßen Meßeinrichtung. Eine Erregerspule $L_1$ eines Tasters T bildet mit einem Kondensator $C_1$ und einer Induktivität $L_2$ einen Serienresonanzkreis, der eine bestimmte Resonanzfrequenz aufwiest. Über einen Koppeltransformator mit einer Primärspule 9 und der Spule $L_2$ als Sekundärspule, der von einem Frequenzgenerator 11 gespeist ist, wird die gewählte Betriebsfrequenz, die innerhalb des Resonanzbereiches liegt, über die Induktivität $L_2$ in den Resonanzkreis $L_1$-$C_1$-$L_2$ eingespeist. Unter Resonanzbereich wird jener Frequenzbereich verstanden, in dem ein Resonanzverhalten des Resonanzkreises auftritt. Vorteilhafterweise werden Resonanzfrequenzen von etwa 400 - 1500 Hz und Betriebsfrequenzen von etwa 100 - 400 Hz gewählt. Vorteilhafterweise liegt die Betriebsfrequenz bei etwa 200 Hz, wenn eine Resonanzfrequenz von etwa 500 Hz vorgegeben ist.

Bevorzugt ist es, wenn die Frequenz des Frequenzgenerators 11 und seine Spannung möglichst konstant gehalten werden.

Als Meßsignals einer derartigen Serienresonanzschaltung wird der Spannungsabfall an der Erregerspule $L_1$ an den Punkten 1 und 2 abgenommen. Über einen Koppelkondensator $C_2$ wird das Meßsignal über eine Diodenbrücke $D_1, D_2, D_3, D_4$ zu einem Siebglied bestehend aus den Bauteilen $C_3, R_1, C_4, R_2$ und $C_5$ geleitet und gelangt zur Anzeigevorrichtung 6. Die Anzeigevorrichtung 6 wird von einer Batterie 8 über ein Potentiometer 7 mit einer veränderlichen Spannung zum Nullpunktsabgleich versorgt.

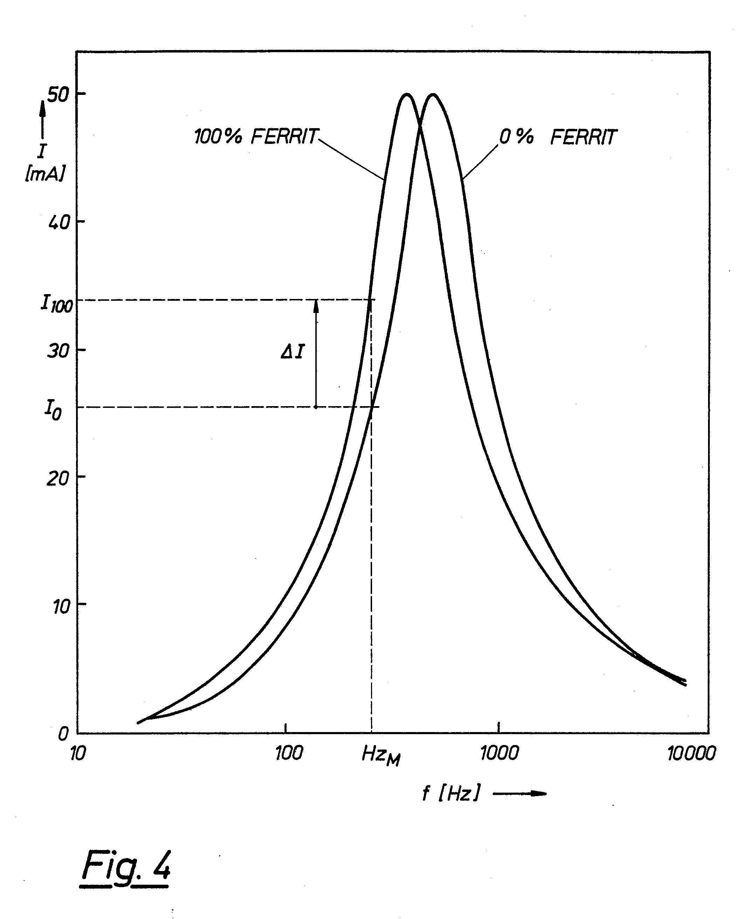

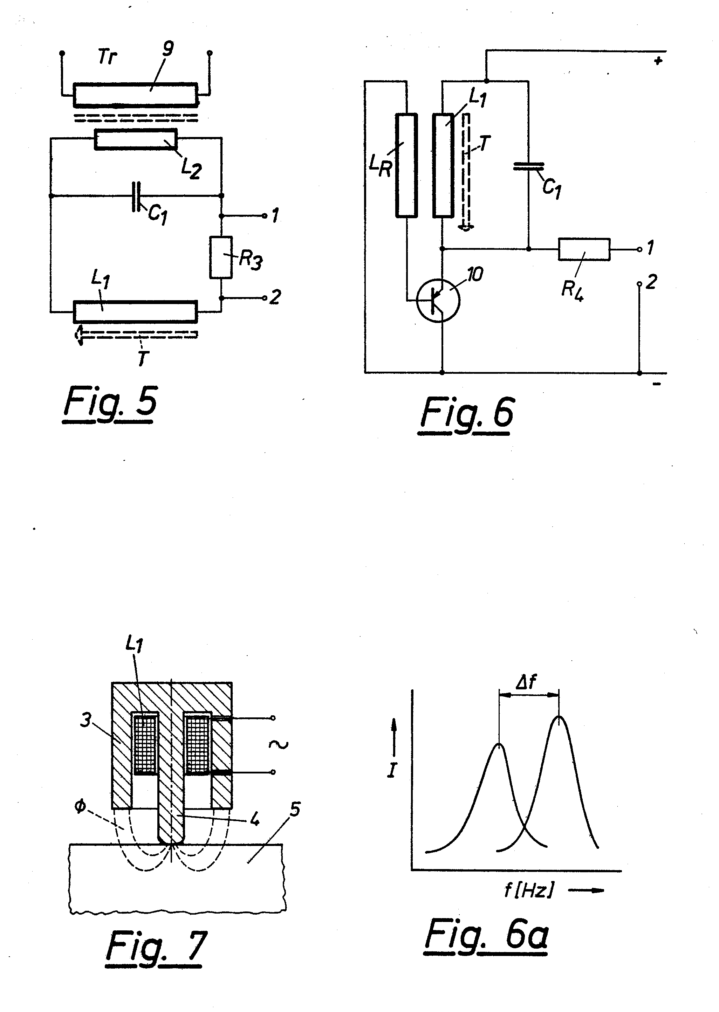

Die erfindungsgemäße Meßeinrichtung nützt die Änderung der Induktivität der Spule $L_1$ bei Ankopplung an eine Probe 5 aus. Diese Erregerspule $L_1$ befindet sich auf bzw. um einen ferritischen Tastkern 4, wie er z.B. in Fig. 7 näher dargestellt ist. Bei Ankopplung des Tastkerns 4 an Luft würde die in Fig. 4 dargestellte Kurve für 0 % Ferrit im Schwingkreis meßbar sein, wenn die Betriebsfrequenz entsprechend variiert würde. Bei gegebener Induktivität der Erregerspule $L_1$, gegebener Induktivität der Sekundärspule $L_2$ und gegebener Kapazität des Kondensators $C_1$ fließt bei der gewählten Meß- bzw. Betriebsfrequenz $Hz_M$ durch die Erregerspule $L_1$ der Strom $I_0$, der einem Ferritgehalt von 0 % entspricht. Die gewählte, den Arbeitspunkt bestimmende Betriebsfrequenz liegt in der Praxis vorteilhafterweise unterhalb der Resonanzfrequenz, um Wirbelstrombeeinflussungen des Meßergebnisses möglichst auszuschalten. Derartige Beeinflussungen ergeben sich bei Messungen mit höheren Frequenzen, sodaß erfindungsgemäß mit im Bereich der linken Flanke der Resonanzkurven gelegenen Frequenzen gemessen wird; die von der Transformatorspule 9 in den Resonanzkreis eingespeiste Meßfrequenz ist in Fig. 4 mit $Hz_M$ bezeichnet.

Wenn eine magnetisierbare Substanz enthaltende Probe 5 an die Erregerspule $L_1$ angekoppelt wird, bedingt die geänderte Induktivität der Erregerspule $L_1$ eine Änderung der Resonanzbedingungen des Serienresonanzkreises. Es er folgt eine Änderung des Resonanzverhaltens, d.h. die Resonanzfrequenz sinkt, wie es in Fig. 4 für die Ankopplung an eine 100 % Ferrit enthaltende Probe dargestellt ist. Bei der gewählten Betriebsfrequenz $Hz_M$ fließt durch die Erregerspule $L_1$ ein Strom $I_{100}$, der dem Meßsignal für 100 % Ferrit entspricht. Der Unterschied zwischen den Meßwerten $I_{100}$ bzw. $I_0$ entspricht einem Meßbereich von 0 - 100 % magnetisierbarer Substanz, im vorliegenden Fall Ferrit.

Bei Messungen einer Probe mit z.B. 50 % Ferritgehalt würde sich eine Resonanzkurve einstellen, die zwischen den Kurven für 0 % Ferrit und 100 % Ferrit liegt und deren Schnittpunkt mit der Betriebsfrequenz $Hz_M$ dem einem 50 %igen Ferritgehalt in der Probe entsprechenden Stromfluß proportional wäre.

Mit mehreren Messungen kann somit eine genaue Kalibrierung der Meßeinrichtung vorgenommen werden.

Der erfindungsgemäßen Meßeinrichtung ist das Meßprinzip zugrundegelegt, daß bei an Luft angekoppelter Erregerspule $L_1$ nur die Induktivität dieser Spule die Resonanzfrequenz des Serienresonanzkreises bestimmt, da $C_1$ und $L_2$ fix vorgegebene Größen sind. Bedingt wird die Induktivität der Erregerspule durch deren Windungszahl und die magnetischen Kenndaten des magnetisierbaren Teiles des Tasters T, insbesondere des ferritischen Kernes bzw. Tastkernes 4 des Tasters T. Koppelt man den Tastkern 4 an ein Werkstück 5 an, wie Fig. 7 zeigt, wird durch das durch den Magnetfluß $\Phi$ im Werkstück 5 hervorgerufene induzierte Magnetfeld die Induktivität der Erregerspule $L_1$ verändert und es ändert sich das Reso nanzerhalten bzw. die Resonanzfrequenz des Serienresonanzkreises.

Fig. 5 zeigt ein ähnliches Meßprinzip, jedoch sind die Erregerspule $L_1$, der Kondensator $C_1$ und die Sekundärwicklung des Transformator 9 zu einem Parallelresonanzschwingkreis zusammmengefaßt, dessen Resonanzverhalten dem eines Serienresonanzkreises im wesentlichen entspricht. Die Meßwerte werden an den Punkten 1 und 2 eines Widerstandes $R_3$ abgenommen, der zwischen der Erregerspule $L_1$ und dem Kondensator $C_1$ eingeschaltet ist.

Fig. 6 zeigt eine Ausführungsform, bei der die Erregerspule $L_1$ mit dem Taster T und der Kondensator $C_1$ einen Schwingkreis bilden, der Bestandteil eines, einen Transistor 10 und eine Rückkoppelungsspule $L_R$ umfassenden NF-Generators ist. Mit Hilfe des Transistors 10 und der Rückkoppelungsspule $L_R$ wird der Schwingkreis $L_1 - C_1$ zu Resonanzschwingungen angeregt. Im Falle einer Änderung der Induktivität durch Ankoppeln der Erregerspule $L_1$ an eine magnetisierbare Substanz enthaltende Probe ändert sich die Induktivität $L_1$ und die Frequenz des Schwingkreises nimmt ab bzw. verschiebt sich zu niedrigeren Frequenzen, wie in Fig. 6a angedeutet ist. Als Meßsignale wird die Frequenzänderung über einen Widerstand $R_4$ an den Punkten 1 und 2 abgenommen.

Die Differenz der Frequenzen gemessen bei 0 % Ferrit, d.h. Erregerspule $L_1$ an Luft, und 100 % magnetisierbarer Substanz, d.h. Erregerspule $L_1$ in Kontakt mit z.B. 100 %igem Ferrit, ergibt die Meßbereichsskala für die Meßeinrichtung.

Fig. 7 zeigt schematisch den Aufbau eines Tasters T. Der Tastkern 4 wird von der Erregerspule $L_1$ umgeben, die ihrerseits von einem zylindrischen magnetischen Joch 3 umgeben wird. Man erkennt die magnetischen Feldlinien, die von dem Tastkern 4 ausgehen und in das Werkstück 5 eindringen, und zum Joch 3 rückgeführt sind, sodaß sich ein geschlossener magnetischer Kreis ergibt.

Vorteilhafterweise wird die Betriebsfrequenz für den Schwingkreis derart bemessen, daß sich die ergebenden Änderungen der gemessenen Parameter in Flankenbereichen der Resonanzkurven ergeben, die eine relative große Änderung der Parameter in Abhängigkeit vom Gehalt an magnetisierbarer Substanz ergeben, d.h. in Flankenbereichen, die große Steigung aufweisen.

4

Die erfindungsgemäße Meßeinrichtung ist für alle magnetisierbaren Substanzen einsetzbar, d.h. für ferromagnetische, martensitische, ferritische und sämtliche andere magnetisierbare bzw. magnetische Substanzen.

Bemerkt wird ferner, daß anstelle der Diodenbrücke $D_1$ - $D_4$ auch eine elektronische Auswertung, z.B. mit Hilfe eines Diskriminators od.dgl., erfolgen kann.

Vorteilhaft ist es bei der erfindungsgemäßen Meßeinrichtung, daß sich bei Änderung der Induktivität der Erregerspule $L_1$ durch Ankoppeln an ein magnetisierbares Werkstück 5 der Stromfluß durch die Induktivität $L_1$ erhöht; dadurch ergibt sich ein höherer Spannungsabfall an der Erregerspule, der die Messung vereinfacht. Da gleichzeitig im Bereich von Resonanzkurven mit großer Steigung bzw. mit zunehmender Steigung gemessen wird, ist insbe sondere auch in Bereichen mit hohen Gehalten an magnetisierbarer Substanz eine genaue Messung möglich.

In Tabelle 1 sind die Ergebnisse von Messungen an einem Ferrit-Probensatz beruhend auf einer metallographischen Ferrit-Strichgitterauswertung, beruhend auf den Meßgeräten M 10B der Fa. Fischer nach Drei-Punkt-Eichung bzw. nach Ein-Punkt-Eichung sowie beruhend auf der erfindungsgemäßen Meßeinrichtung angeführt. Man erkennt, daß die Meßergebnisse mit der erfindungsgemäßen Meßeinrichtung mit den Meßergebnissen gemäß der metallographischen Ferrit-Strichgitterauswertung sehr gut übereinstimmen und insbesondere in Bereichen mit hohen Anteilen von Ferrit eine ausgezeichnete Übereinstimmung der Meßwerte bestand, während mit den herkömmlichen Geräten ausgesprochen große Meßwertabweichungen erhalten wurden.

Aufgrund der hohen verwendeten Feldstärke von z.B. 60 A/cm bei der erfindungsgemäßen Meßeinrichtung werden die magnetischen Werte der Proben im flachen Kurvenverlauf der Magnetisierungsabhängigkeit dB/dH gemessen. In diesem Bereich steht jedoch die relative Permeabilität in einem direkt proportionalen Zusammenhang mit dem Gehalt der Werkstoffe an magnetisierbarer Substanz, sodaß eindeutig zuordenbare Meßwerte vorliegen.

TABELLE 1

<div align="center">

**Ausführungsbeispiele**

Meßversuche an einem Ferrit-Probensatz der Qualitäten A 903-So und A 905-So

</div>

| Schmelze | Probe-Nr. | Spez.Wider-stand | Metallo-graf.Ferrit-Strichgitter-auswertung | Fischer M10B 3Pkt.Eichung 2,7/9,6/29,6% | Fischer M10B 1Pkt.Eichung 100 % | Erfindungsgemäße Meßeinrichtung |
|---|---|---|---|---|---|---|
| 10468 | 6 | 0,869 m | 39,9 % | 43,1 $\pm$ 1 % | 42,3 % | 41,2 $\pm$ 0,4 % |
| 10683 | 7 | 0,849 " | 44,3 % | 45,2 $\pm$ 0,6 % | 43,2 % . | 46,3 $\pm$ 0,4 % |
| 10463 | 8 | 0,880 " | 45,9 % | 48,9 $\pm$ 1,8 % | 45,9 % | 45,9 $\pm$ 0,8 % |
| 10462 | 9 | 0,880 " | 68,6 % | 76,7 $\pm$ 3,1 % | 74,9 % | 69,1 $\pm$ 1,0 % |
| 10466 | 10 | 0,842 " | 71,7 % | 64,8 $\pm$ 1,9 % | 63,0 % | 72,0 $\pm$ 1,4 % |
| 10461 | 11 | 0,908 " | 86,2 % | 101,3 $\pm$ 2,4 % | 95,9 % | 88,2 $\pm$ 1,3 % |
| 10681 | 12 | 0,720 " | 93,4 % | 85,5 $\pm$ 2,5 % | 82,5 % | 91,2 $\pm$ 1,1 % |
| 10460 | 13 | 0,885 " | 97,9 % | 91,0 $\pm$ 5,3 % | 87,9 % | 97,4 $\pm$ 1,7 % |

0 267 896

## Patentansprüche

1. Meßeinrichtung zur Bestimmung des Gehaltes an magnetisierbarer Substanz, insbesondere von Ferrit und Martensit, in einer Probe, wobei die Meßeinrichtung eine vorzugsweise mit einem Eisenkern versehene Erregerspule für ein an die zu untersuchende Probe anzulegendes Magnetfeld, eine Auswerteschaltung sowie eine Anzeigeeinrichtung für den Gehalt an magnetisierbarer Substanz in der Probe proportionale Meßwerte aufweist, dadurch gekennzeichnet, daß die Erregerspule ($L_1$) Teil eines auf eine bestimmte Resonanzfrequenz abgestimmten und vorzugsweise im Einsatz in einem gewählten Arbeitspunkt betriebenen Schwingkreises ($L_1$, $C_1$, $L_2$) ist, daß die Erregerspule ($L_1$) bezüglich ihrer magnetischen Werte, insbesondere bezüglich ihrer Induktivität, durch das in der Probe (5) aufgrund des angelegten Magnetfeldes induzierte Magnetfeld veränderbar ist, wobei ihre Veränderung eine neue Resonanzfrequenz des Schwingkreises festlegt, und daß die Veränderung zumindest eines der Parameter des Schwingkreises, z.B. Strom, Spannung, Frequenz, bei Veränderung der Resonanzfrequenz der Anzeigevorrichtung als dem Gehalt an magnetisierbarer Substanz proportionaler Meßwert zugeführt ist.

2. Meßeinrichtung nach Anspruch 1, dadurch gekennzeichnet, daß der Schwingkreis von einer Serienresonanzschaltung der Erregerspule ($L_1$), eines Kondensators ($C_1$) und einer Kopplungsspule ($L_2$) zur Einspeisung der Betriebsfrequenz des Schwingkreises gebildet ist.

3. Meßeinrichtung nach Anspruch 2, dadurch gekennzeichnet, daß als Meßwert für die Auswerteschaltung der Span nungsabfall an der Erregerspule ($L_1$) abgegriffen ist.

4. Meßeinrichtung nach Anspruch 1, dadurch gekennzeichnet, daß der Schwingkreis von einer Parallelresonanzschaltung der Erregerspule ($L_1$) eines Kondensators ($C_1$) und einer Kopplungsspule ($L_2$) zur Einspeisung der Betriebsfrequenz des Schwingkreises gebildet ist.

5. Meßeinrichtung nach Anspruch 4, dadurch gekennzeichnet, daß als Meßwert für die Auswerteschaltung der Stromwert im Kreis bzw. der Spannungsabfall an einem zwischen dem Kondensator ($C_1$) und der Erregerspule ($L_1$) eingeschalteten Widerstand ($R_3$) abgegriffen ist.

6. Meßeinrichtung nach Anspruch 1, dadurch gekennzeichnet, daß von der Erregerspule ($L_1$) und einem ihr parallel oder in Serie geschalteten Kondensator ($C_1$) ein Schwingkreis gebildet ist, welcher an einen NF-Generator (10, $L_R$) angekoppelt ist bzw. einen Teil desselben bildet, wobei die Frequenz des Schwingkreises durch Ankopplung an ein Werkstück veränderbar ist.

7. Meßeinrichtung nach Anspruch 6, dadurch gekennzeichnet, daß der Schwingkreis auf eine bestimmte Resonanzfrequenz abgestimmt ist und als Meßwert für die Auswerteschaltung die Frequenzänderung des Schwingkreises bei Änderung der Induktivität der Erregerspule ($L_1$) abgeführt ist.

8. Meßeinrichtung nach einem der Ansprüche 1 bis 7, dadurch gekennzeichnet, daß die Erregerspule ($L_1$) einen an das zu untersuchende Werkstück (5) anlegbaren, verzugsweise ferritischen, Tastkern (4) umgibt und von einem vorzugweise zylindrischen Magnetjoch (3) umgeben ist, dessen eines Ende mit dem Tastkern (4) verbunden und dessen anderes Ende vom Tastkern (4) überragt ist.

9. Meßeinrichtung nach einem der Ansprüche 1 bis 8, dadurch gekennzeichnet, daß der Anzeigevorrichtung als Auswerteschaltung für das Meßsignal ein Brückengleichrichter ($D_1,D_2,D_3,D_4$) und eine Siebkette ($C_3,C_4,R_1,R_2,C_5$) vorgeschaltet sind.

10. Meßeinrichtung nach einem der Ansprüche 1 bis 5, 8 oder 9, dadurch gekennzeichnet, daß als Betriebsfrequenz des Serien- oder Parallelresonanzkreises eine im Frequenzbereich der größte Steigung aufweisenden Flankenabschnitte der Resonanzkurve gelegene Frequenz vorgesehen ist.

11. Meßeinrichtung nach einem der Ansprüche 1 bis 10, dadurch gekennzeichnet, daß die Feldstärke des von der Erregerspule ($L_1$) an die Probe (5) angelegten Magnetfeldes zwischen 20 und 200, vorzugsweise zwischen 30 und 100, insbesondere zwischen 50 und 70 A/cm, liegt.

12. Meßeinrichtung nach einem der Ansprüche 1 bis 11, dadurch gekennzeichnet, daß als Betriebsfrequenz Frequenzen zwischen 100 und 300 Hz, vorzugsweise um etwa 200 Hz, vorgesehen sind.

*Fig.1*

Fig. 2

0267896

## Fig. 3

0267896

0267896

Fig. 4

**Fig. 5**

**Fig. 6**

**Fig. 7**

**Fig. 6a**